# EUROPÄISCHE PATENTSCHRIFT

(11) **EP 0 774 472 B1**
(45) Veröffentlichungstag und Bekanntmachung des Hinweises auf die Patenterteilung: **03.02.1999**
(21) Anmeldenummer: 96118041.1
(22) Anmeldetag: 11.11.1996
(51) Int. Cl.: C08F 214/22

(54) **Peroxidisch vernetzbare Fluorkautschuke, ein Verfahren zu deren Herstellung und deren Verwendung**
Fluoroelastomers curable by peroxides, process for their production and use thereof
Fluoro-élastomères réticulables par des péroxydes, leur préparation et utilisation

(30) Priorität: 15.11.1995 DE 19542501
(43) Veröffentlichungstag der Anmeldung: 21.05.1997
(73) Patentinhaber: BAYER AG, 51368 Leverkusen (DE)
(72) Erfinder: Krüger, Ralf, Dr., 51061 Köln (DE); Woeste, Govert, Dr., 40237 Düsseldorf (DE); Filchakova, T.A., Dr., 198302 St. Petersburg (RU); Kollar, Alexandr Nikolaevich, Dr., 193230 St. Petersburg (RU); Sokolov, Sergey Vasilyevich, Prof.Dr., 198217 St. Petersburg (RU); Greenblat, Mark Peysakhovich, Prof.Dr., 196128 St. Petersburg (RU); Veretennikov, Nikolay Vladimirovich, Dr., 191014 St. Petersburg (RU)

(56) Entgegenhaltungen:
- EP-A- 0 055 407
- EP-A- 0 290 848
- WO-A-92/20743
- FR-A- 2 305 462

## Beschreibung

Die vorliegende Erfindung betrifft peroxidisch vernetzbare Fluorkautschuke aus polymerisierten Einheiten von Vinylidenfluorid, mindestens einem fluorierten Propen und/oder einem fluorierten Methyl-vinylether, mindestens einem Perfluor(polyoxa-alkyl-vinylether), gegebenenfalls Tetrafluorethylen und vernetzungsaktiven Reaktivstellen, ein Verfahren zu deren Herstellung und deren Verwendung.

Fluorkautschuke auf der Basis von Vinylidenfluorid (VDF), Hexafluorpropen (HFP) und gegebenenfalls Tetrafluorethylen (TFE) weisen bekanntermaßen gute Quell- und Alterungseigenschaften in Anwendungen bis weit über 200°C auf. Diesen stehen die unbefriedigenden elastischen Eigenschaften im Tieftemperaturbereich gegenüber. Die Glastemperaturen besagter peroxidisch vernetzbarer Fluorkautschuke liegen zwischen 0°C und im günstigsten Fall -20°C.

Für viele Anwendungen liegt die kritische Grenze für den Einsatz jedoch bei Temperaturen von -30°C und tiefer.

Daher wurden bisher große Anstrengungen unternommen, um die Tieftemperaturflexibilität von Fluorelastomeren zu verbessern.

Ein bekannter Weg ist die teilweise oder vollständige Substitution von HFP durch Perfluor(alkyl-vinylether-Einheiten (CF₂=CF-O-R_{F}), wobei R_{F} z.B. ein perfluorierter Alkylrest wie -CF₃, -C₂F₅ oder -C₃F₇ sein kann. Als Referenzen seien hier die Patente DE-A 1 240 670, DE-A 2 457 102, EP-A 525 685, EP-A 525 687, FR 2 347 389 und US 4035565 angeführt.

Allerdings gelingt eine für die oben genannten Zwecke ausreichende Absenkung der Glastemperatur (T_{g}) selbst mit den höchstmöglichen Anteilen copolymerisierter Einheiten dieser teuren Perfluor(alkyl-vinylether) im peroxidisch vernetzbaren Fluorkautschuk nicht.

Anstelle dieser Perfluor(alkyl-vinylether) können Perfluor(vinylether)-Einheiten, die mehr als eine Etherbrücke enthalten, sogenannte Perfluor(polyoxa-alkyl-vinylether)-Einheiten, eingesetzt werden, da diese eine stärkere Wirkung bezüglich der Verbesserung der Kälteflexibilität von Fluorkautschuken zeigen. Hierbei sind unverzweigte Perfluor(polyoxa-alkyl-vinylether)-Einheiten effizienter bei der Absenkung von T_{g} als verzweigte. Als Referenz für derartige Perfluor(polyoxa-alkyl-vinylether)-Einheiten enthaltende Fluorkautschuke seien hier die Patente EP-A 0 077 998 und EP-A 0 290 848 angeführt.

Da die teuren Perfluor(polyoxa-alkyl-vinylether)-Einheiten nach dem bisherigen Stand der Technik in sehr hohen Anteilen, bezogen auf den gesamten Fluorkautschuk, in den Fluorkautschuken enthalten sind, sind die Herstellkosten für derartige Fluorkautschuke mit exzellenten Tieftemperatureigenschaften sehr hoch. Zudem hat die schlechte Copolymerisierbarkeit von VDF bzw. TFE mit den Perfluor(polyoxa-alkyl-vinylether)-Einheiten entweder lange Reaktionszeiten oder geringe Ausbeuten zur Folge. Auch hier seien die Patente EP-A 0 077 998 und EP-A 0 290 848 als Referenzen angeführt.

Aufgabe der vorliegenden Erfindung ist daher die Bereitstellung von peroxidisch vernetzbaren Fluorkautschuken, die gegenüber dem Stand der Technik (VDF/HFP/TFE-Kautschuke) eine spürbare Absenkung der Glastemperaturen bei möglichst niedrigem Einsatz teurer modifizierender Comonomerbausteine aufweisen.

Überraschenderweise konnte diese Aufgabe mit peroxidisch vernetzbaren Fluorkautschuken, die als polymerisierte Einheiten bestimmte Anteile von mindestens einem fluorierten Propen und/oder fluorierten Methyl-vinylether, mindestens einer Perfluor(polyoxa-alkyl-vinylether)-Einheit der Formel (I)

CF₂=CF-O-R_{F}, (I),

mit R_{F} = -(CF₂)ᵢ (-O-CF₂)ⱼ-O-CF₃;
mit i=3 und j=0
oder i=2 und j=1-4
oder R_{F} = -(CF₂-CF₂-O)ₖ-CₗF₂ₗ₊₁;
mit k= 1-4 und l=1 oder 2,
Vinylidenfluorid und gegebenenfalls Tetrafluorethylen sowie vernetzungsaktive Reaktivstellen enthalten, gelöst werden

Gegenstand der Erfindung sind daher peroxidisch vernetzbare Fluorkautschuke, die vernetzungsaktive Reaktivstellen aufweisen und polymerisierte Einheiten von Vinylidenfluorid, gegebenenfalls Tetrafluorethylen, mindestens einem fluorierten Propen und/oder Methylvinylether und mindestens einem Perfluor(polyoxa-alkyl-vinylether) enthalten, dadurch gekennzeichnet, daß diese
a) 65-82 mol% Vinylidenfluorid,
b) 0-12 mol% Tetrafluorethylen,
c) 12-23 mol% mindestens eines fluorierten Propens und/oder fluorierten Methyl-vinylethers,
d) 0,3-6 mol% mindestens eines Perfluor(polyoxa-alkyl-vinylether)s der Formel (I)

   CF₂=CF-O-R_{F} (I),

   wobei R_{F} = -(CF₂)ᵢ(-O-CF₂)ⱼ-O-CF₃ mit i = 3 und j = 0 oder i = 2 und j = 1-4;
   oder wobei R_{F} = -(CF₂-CF₂-O)ₖ-CₗF₂ₗ₊₁ mit k = 1-4 und l = 1 oder 2 und
e) 0,1-1,0 mol% vernetzungsaktive Reaktivstellen enthalten,
wobei die Summe aller Komponenten 100 mol% ergibt.

In einer bevorzugten Ausführungsform der Erfindung enthalten die peroxidisch vernetzbaren Fluorkautschuke kein Tetrafluorethylen. In einer anderen bevorzugten Ausführungsform der Erfindung enthalten die erfindungsgemäßen Fluorkautschuke 5-12 mol-% Tetrafluorethylen.

Fluorierte Propene c) im Sinne der Erfindung sind vorzugsweise Verbindungen der Formel C₃HₙF₆₋ₙ mit n=0-5, besonders bevorzugt Hexafluorpropen sowie 1-Hydro- und 2-Hydro-pentafluorpropen. Fluorierte Methyl-vinylether c) im Sinne der Erfindung sind vorzugsweise Verbindungen der Formel C₃HₙF₆₋ₙO mit n=0-3, besonders bevorzugt Methyl-trifluorvinylether, Trifluormethyl-vinylether und Perfluormethylvinylether.

Besonders bevorzugt ist Komponente c) mindestens eine Verbindung aus der Gruppe Hexafluoropren, Pentafluoropren und/oder Perfluormethylvinylether.

Perfluor(polyoxa-alkyl-vinylether) d) im Sinne der Erfindung sind Verbindungen der Formel (I) mit

CF₂=CF-O-R_{F} (I),

wobei R_{F} = -(CF₂)ᵢ(-O-CF₂)ⱼ-O-CF₃ mit i = 3 und j = 0 oder i = 2 und j = 1-4, wobei die Kombination aus i = 2 und j = 1-4 und i = 3 und j = 0 bevorzugt ist,
oder wobei R_{F} = -(CF₂-CF₂-O)ₖ-CₗF₂ₗ₊₁ mit k = 1-4 und l = 1 oder 2, vorzugsweise k = 1-4 und l = 1.

Formel I umfaßt dabei folgende Verbindungen der Formeln

CF₂=CF-O-(CF₂)ᵢ-OCF₃ mit i = 3 und bei j = 0 (Ia)

CF₂=CF-O-CF₂-CF₂-(OCF₂)ⱼ-OCF₃ mit j = 1-4 und bei i = 2 (Ib)

CF₂=CF-O-(CF₂-CF₂O)ᵢ-CF₃ mit i = 1-4 und bei j = 1 sowie (Ic)

CF₂=CF-O-(CF₂-CF₂O)ᵢ-CF₂-CF₃ mit i = 1-4 und bei j = 2 (Id).

Als Komponente d) sind Verbindungen der Formeln (Ia) und (Ib) besonders bevorzugt. Für die Herstellung der Perfluor(polyoxa-alkyl-vinylether) der Formel (I) wird auf US 3 321 532, US 3 326 984, US 3 450 684, US 3 692 843 und EP-A 290 848 verwiesen.

Vernetzungsaktive Reaktivstellen e) im Sinne der Erfindung sind vorzugsweise C=C-Doppelbindungen und/oder Brom- und/oder Iodreste, eingeführt durch Polymerisation in Gegenwart von mindestens 2 C=C-Doppelbindungen enthaltenden Verbindungen, wie z.B. Triallylisocyanurat, oder wie in US 5 247 036 oder US 5 214 115 beschrieben und/oder Brom- und/oder Iod-haltigen Olefinen und/oder gesättigten Verbindungen, wie z.B. Bromtrifluorethylen, Bromtetrafluorbuten, Difluorbromethylen, Perfluor(2-bromethyl-vinylether) und Diiodmethan oder Verbindungen, wie sie in DE-A 4 023 657, US 4 943 622, EP-A 208 314 oder US 4 973 634 beschrieben sind, und/oder eingeführt wie in DE-A-4 440 201 bzw. DE-A-19 530 636 beschrieben.

In einer bevorzugten Ausführungsform der Erfindung enthalten die peroxidisch vernetzbaren Fluorkautschuke
a) 70-82 mol% Vinylidenfluorid,
b) 0-12 mol% Tetrafluorethylen,
c) 16-23 mol% mindestens eines fluorierten Methyl-vinylethers,
d) 0,3-5 mol% mindestens eines Perfluor(polyoxa-alkyl-vinylether)s der Formel (I)

   CF₂=CF-O-R_{F} (I),

   wobei R_{F} = -(CF₂)ᵢ(-O-CF₂)ⱼ-O-CF₃ mit i = 3 und j = 0 oder i = 2 und j = 1-4;
   oder wobei R_{F} = -(CF₂-CF₂-O)ₖ-CF₃ mit k = 1-4, vorzugsweise R_{F} = -(CF₂)ᵢ(-O-CF₂)ⱼ-O-CF₃ mit i = 3 und j = 0 oder i = 2 und j = 1-4, und
e) 0,1-1,0 mol% vernetzungsaktive Reaktivstellen.

In einer weiteren bevorzugten Ausführungsform der Erfindung enthalten die peroxidisch vernetzbaren Fluorkautschuke
a) 65-82 mol% Vinylidenfluorid,
b) 0-12 mol% Tetrafluorethylen,
c) 12-20 mol% mindestens eines fluorierten Propens,
d) 1-6 mol% mindestens eines Perfluor(polyoxa-alkyl-vinylether)s der Formel (I)

   CF₂=CF-O-R_{F} (I),

   wobei R_{F} = -(CF₂)ᵢ(-O-CF₂)ⱼ-O-CF₃ mit i = 3 und j = 0 oder i = 2 und j = 1-4;
   oder wobei R_{F} = -(CF₂-CF₂-O)ₖ-CF₃ mit k = 1-4, vorzugsweise R_{F} = -(CF₂)ᵢ(-O-CF₂)ⱼ-O-CF₃ mit i = 3 und j = 0 oder i = 2 und j = 1-4, und
e) 0,1-1,0 mol% vernetzungsaktive Reaktivstellen.

Die Mooney-Viskosität (ML₁₊₁₀ bei 120°C) nach ASTM-D ist vorzugsweise ≤120.

Gegenstand der Erfindung ist zudem ein Verfahren zur Herstellung der erfindungsgemäßen peroxidisch vernetzbaren Fluorkautschuke, wonach die Komponenten a), c) bis e) und gegebenenfalls b) radikalisch in Lösung, Suspension oder Emulsion bei 0°C bis 120°C, bei erhöhtem Druck copolymerisiert werden.

In einer bevorzugten Ausführungsform des erfindungsgemäßen Verfahrens werden die Komponenten a), c) bis e) und gegebenenfalls b) in wäßriger Dispersion in Gegenwart von perfluorierten Emulgatoren bei Temperaturen von 20 bis 80°C, einem Druck von ≥2 bar mit einem radikalischen Initiatorsystem copolymerisiert.

Die erfindungsgemäßen Fluorkautschuke können entsprechend den bekannten Polymerisationsmethoden wie Substanz-, Lösungs- und Emulsionspolymerisation hergestellt werden. Bevorzugt wird die Herstellung auf dem Weg der wäßrigen Emulsionspolymerisation. Zur Stabilisierung der Dispersion werden fluorhaltige Emulgatoren allein, ein Saatlatex allein, oder eine Mischung, bestehend aus einem Saatlatex und fluorierten Emulgatoren, eingesetzt. Bevorzugt gelangen perfluorierte Emulgatoren, wie beispielsweise wasserlösliche Salze der C₆-C₁₂-Perfluorcarbonsäure oder -sulfonsäure oder Perfluoralkylcarbonsäuren auf Basis von Oligomeren des Hexafluorpropylenoxids, zum Einsatz. Beispielhaft seien hier die Natrium-oder Ammoniumsalze der Perfluoroktansäure und der Perfluor-(2,5-dimethyl-3,6-dioxa-nonansäure) sowie das Lithiumsalz der Perfluoroktylsulfonsäure genannt. Die Emulgatoren werden vorzugsweise in einer Konzentration von 0,05 bis 2 Gew.-%, besonders bevorzugt 0,1 bis 1,5 Gew.-%, bezogen auf die wäßrige Phase, eingesetzt. Der Emulgator kann vor Beginn der Polymerisation der Flotte zugegeben oder gegebenenfalls auch, über den Zeitraum des Polymerisationsvorganges verteilt, kontinuierlich zudosiert werden. Wird ein Saatlatex verwendet, so besteht dieser aus Fluorpolymerpartikeln mit einer mittleren Partikelgröße ≤ 60 nm, die mit einem oder mehreren der genannten Emulgatoren stabilisiert sind.

Zur Initiierung der radikalischen Copolymerisation werden vorzugsweise bekannte und für das jeweilige Reaktionsmedium geeignete Verbindungen eingesetzt. So werden vorzugsweise bei der Lösungs- und Suspensionspolymerisation organische, öllösliche Peroxide, die auch fluoriert sein können, wie Benzoylperoxid, Trifluoracerylperoxid oder organische lösliche Azoverbindungen, wie Azoisobutyronitril, verwendet. Bei der Emulsionspolymerisation, die für die Herstellung der erfindungsgemäßen peroxidisch vernetzbaren Fluorkautschuke bevorzugt ist, werden wasserlösliche anorganische Perverbindungen als Initiatoren benutzt, wie Persulfate, Perborate, Percarbonate etc., im allgemeinen in Form ihrer Natrium- oder Ammoniumsalze.

In Abhängigkeit von der Polymerisationstemperatur und von der Zerfallskonstante des Initiators werden vorzugsweise bei Verwendung niederer Temperaturen zur Polymerisation Zerfallsbeschleuniger, in der Regel Reduktionsmittel, zusätzlich eingesetzt. Als solche können beispielsweise dienen: Schwefelverbindungen, wie etwa Natriumsulfit, Natriumpyrosulfit oder Rongalit C (Natriumformamidinsulfinsäure), weiterhin organische Reduktionsmittel, wie Ascorbinsäure, Metallsalze, wie Eisen-(II)- oder Kobalt-(II)-Salze, metallorganische Verbindungen etc.

Daneben ist auch ein Initiatorsystem, bestehend aus mindestens einer Manganverbindung oder einem Gemisch aus mehreren Manganverbindungen in Oxidationsstufen ≥ 3 und gegebenenfalls einem Reduktionsmittel, wie z.B. Carbonsäuren, Dicarbonsäuren, mehrwertigen Alkoholen und Hydroxycarbonsäuren, einsetzbar.

Die Reaktionstemperaturen für die Copolymerisation liegen zwischen 0 und +120°C, bevorzugt bei 20 bis 80°C. Die Polymerisationstemperatur hängt von der Reaktivität der eingesetzten Comonomeren sowie von den gewünschten Eigenschaften der herzustellenden erfindungsgemäßen peroxidisch vernetzbaren Fluorkautschuke ab.

Die Copolymerisationen werden vorzugsweise unter erhöhtem Druck durchgeführt. Dieser Druck soll mindestens 2 bar betragen, braucht aber den Wert von 100 bar nicht zu überschreiten. Der gewählte Druck hängt von der gewünschten Polymerisationsgeschwindigkeit und von dem gewünschten Gehalt der einzelnen Komponenten ab, da deren Löslichkeit und damit ihr Einbauverhältnis über den eingestellten Druck adjustiert werden kann.

Um das Molekulargewicht der entstehenden erfindungsgemäßen Fluorkautschuke einzustellen, können Kettenübertragungsmittel, wie Methanol, Isopropanol, Isopentan, Ethylacetat, Diethylmalonat, Tetrachlorkohlenstoff sowie Jod-, Brom- und Jod/Brom-haltige Substanzen erforderlichenfalls eingesetzt werden.

Die Herstellung der erfindungsgemäßen Fluorkautschuke kann absatzweise, bevorzugt aber nach halbkontinuierlichen oder kontinuierlichen Verfahren erfolgen.

Die erfindungsgemäßen Fluorkautschuke lassen sich nach üblichen Methoden radikalisch vernetzen. Als radikalische Initiatoren dienen vorzugsweise Peroxide, die bei Temperaturen oberhalb 100°C Halbwertszeiten der Zersetzung von mindestens 5 Minuten aufweisen, wie beispielsweise Dibenzoylperoxid, t-Butylperoxybenzol, Bis-(t-butylperoxy-isopropyl)benzol, 2,5-Bis-( t-butylperoxy)-2,5-dimethylhexan oder 2,5-Bis-( t-butylperoxy)-2,5-dimethylhexin-(3).

Die Peroxide werden dabei vorzugsweise in einer Menge von 0,5-10 Gew.-Teilen, besonders bevorzugt 1-5 Gew.-Teilen, bezogen auf 100 Teile der erfindungsgemäßen Fluorkautschuke, zugegeben.

Die Zugabe von zusätzlichen Covernetzern ist, insbesondere bei der Druckhärtung, möglich, um bessere Vulkanisations- und mechanische Eigenschaften zu erhalten. Als Covernetzer kann eine Vielzahl von Verbindungen mit mehreren Doppelbindungen dienen, wie z.B. Triallylcyanurat, Triallylisocyanurat, Tri(meth)allylisocyanurat, Tetramethyltetra-vinylcyclotetrasiloxan, Triallylphosphit und N,N'-m-Phenylenbismaleinimid, die in Mengen von vorzugsweise 0,1-15, besonders bevorzugt 0,5-10 Gew.-Teilen, bezogen auf 100 Teile der erfindungsgemäßen Fluorkautschuke, enthalten sind.

Weiterhin kann die vulkanisierbare Mischung als Säureakzeptor dienende Oxide oder Hydroxide von Metallen, wie beispielsweise Magnesium, Calcium, Blei, Zink und Barium oder mindestens ein basisches Salz mit einem organischen Säurerest, wie Natriumacetat, Magnesiumoxalat oder Carbonate oder basisches Bleiphosphat oder einer Kombination daraus in Anteilen von nicht mehr als 15 Gew.-Teilen, bezogen auf 100 Teile des erfindungsgemäßen Fluorkautschuks, enthalten.

Die Zugabe von weiteren bekannten Füllstoffen, Verstärkungsmitteln, Weichmachern, Schmierstoffen, Verarbeitungsstoffen, Pigmenten oder ähnlichem ist möglich.

Eine Einarbeitung der vorgenannten Mischungsbestandteile in die erfindungsgemäßen peroxidisch vernetzbaren Fluorkautschuke geschieht nach den bekannten Methoden der Mischungsbildung, z.B. in einem Walzwerk oder einem Innenkneter.

Die Vulkanisation erfolgt in der Regel bei 120 bis 200°C in einer ersten Stufe unter Druck in einer dem Erhalt der Dimensionsstabilität dienenden Form und wird dann zur Einstellung der Endeigenschaften im Umlaufofen nachvulkanisiert.

Die erfindungsgemäßen Fluorkautschuke können nach den gängigen Methoden, wie z.B. injection moulding, transfer moulding oder compression moulding zu vernetzten Formkörpern verarbeitet werden.

Gegenstand der Erfindung ist zudem die Verwendung der erfindungsgemäßen Fluorkautschuke zur Herstellung von technischen Kautschukartikeln, wie Dichtungen, Schläuchen und O-Ringen.

Die nachfolgenden Beispiele dienen der Erläuterung der Erfindung, ohne dabei limitierend zu wirken.

### Ausführungsbeispiele

### Beispiel 1

In ein evakuiertes und mit Argon gespültes Reaktionsgefäß von einem Liter Inhalt wurden 447 g destilliertes Wasser, 5 g C₃F₇OCF(CF₃)CF₂OCF(CF₃)COONH₄ als Emulgator und 1,0 g (NH₄)₂S₂O₈ sowie 0,12 g Na₂S₂O₅ als Starter eingefüllt. In einen Vorratsbehälter wurde ein Monomerengemisch, bestehend aus 76,3 g VDF, 59,4 g Perfluormethylvinylether, 1,1 g 1,1-Difluor-bromethylen und 13,2 g CF₂=CF-O-CF₂-CF₂-(O-CF₂)₂-O-CF₃ entsprechend molaren Anteilen von 75,0:22,5:0,5:2,0 mol%, eingefüllt, so daß der Druck im Vorratsgefäß bei 20-25°C 40-100 bar betrug. Von dem Monomerengemisch wurde über einen an der Vorratsbehälterunterseite angebrachten Ausgang soviel in das Reaktionsgefäß vorgelegt, daR der Druck im Reaktionsgefäß 3 bar betrug. Das Reaktionsgemisch wurde auf 50°C aufgeheizt und der Druck durch Nachdosieren des oben genannten Monomerengemisches auf 10 bis 11 bar eingestellt. Der nach Einsetzen der Reaktion abfallende Druck wurde durch periodisches Nachdosieren des oben genannten Monomerengemisches bis zu dessen vollständigen Verbrauch wieder auf 10 bis 11 bar einreguliert. Nach einer Reaktionszeit von 17 Stunden wurde das Reaktionsgemisch auf 20°C abgekühlt und zur Beendigung der Reaktion 50 g einer 3 Gewichtsprozent NaNO₂ enthaltenden wäßrigen Lösung zugegeben. Nach weiteren 3 bis 5 Minuten Rührzeit wurde entgast und der erhaltene Latex durch Ausfrieren oder durch Zugabe von 2%-iger Calciumchlorid-Lösung koaguliert. Danach wurde filtriert, das Polymerisat mit heißem Wasser gewaschen und schließlich bei 70°C und Normaldruck getrocknet (95% Ausbeute). Laut ¹⁹F-NMR-Spektroskopie enthielt das Produkt die Monomere VDF:Perfluormethylvinylether:1,1-Difluor-bromethylen:CF₂=CF-O-CF₂-CF₂-(O-CF₂)₂-O-CF₃ in An-teilen von 78,7:19,2:0,4:1,7 mol%. Der [η]-Wert wurde in Hexafluorbenzol als Lösungsmittel bei einer Temperatur von 25°C bestimmt und betrug 0,62 dl/g. Die Mooney-Viskosität wurde gemäß ASTM-D 1646 bei 100°C bestimmt. Der Wert nach 10 Minuten betrug 71.

Zur Bestimmung der Glastemperatur wurde ein zylindrischer Probenkörper unter Einfluß eines statischen Gewichtes mit einer Rate von 5 K/min auf 10-20 K unterhalb der erwarteten Glastemperatur abgekühlt. Nach einer Wartezeit von 10 Minuten wurde das Gewicht entfernt und die Probe mit einer Rate von 1 K/min aufgeheizt, wobei Temperatur und Dehnung registriert wurden. Die Glastemperatur, als Temperatur bei Beginn der gleichmäßigen Verformung, betrug -39°C.

Von dem Polymer wurde auf einer Walze mit folgenden Substanzen eine peroxidisch vernetzbare Mischung hergestellt, wobei die angegebenen Mengen (Gewichts-Teile) auf 100 Gewichts-Teile Polymer bezogen sind: 30 Teile Ruß T 900, 4 Teile Calciumhydroxid, 2 Teile Triallylisocyanurat und 5 Teile Peroximon (Gemisch aus 1,3-Bis-(tert.-butyl-peroxy-isopropyl)-benzol und 1,4-Bis-(tert.-butyl-peroxy-isopropyl)-benzol). Die erhaltene Mischung wurde bei einer Temperatur von 170°C bei einem Druck von mindestens 59 bar 10 Minuten lang gepreßt, danach heiß-entformt und auf 25°C abgekühlt. Anschließend wurden die Proben nach einer mindestens sechsstündigen Lagerzeit bei 25°C im Umluftofen nach einer Aulheizzeit von 30 Minuten 60 Minuten lang bei 100°C, nach einer weiteren Aufheizzeit von 30 Minuten 30 Minuten lang bei 150°C, nach einer weiteren Aufheizzeit von 30 Minuten 30 Minuten lang bei 200°C und nach einer weiteren Aufheizzeit von 30 Minuten 24 Stunden lang bei 250°C nachveinetzt. Vor allen weiteren Tests wurden die Proben mindestens 6 Stunden bei 25°C gelagert. Die Zug/Dehnungsmessung wurde gemäß ASTM D-412 durchgeführt und ergab eine Zugfestigkeit von 11,8 MPa und eine Zugdehnung von 170%. Zur Bestimmung des Druckverformungsrestes wurde ein zylindrischer Probenkörper (Durchmesser und Höhe jeweils 10 mm) bei 200°C für 24 Stunden auf 20 % zusammengepreßt und danach 30 Minuten lang bei 25°C gelagert. Anschließend wurde der Druckverformungsrest zu 21 % bestimmt.

### Beispiel 2

In ein evakuiertes und mit Argon gespültes Reaktionsgefäß von einem Liter Inhalt wurden 450 g destilliertes Wasser, 2,5 g C₃F₇OCF(CF₃)CF₂OCF(CF₃)COONH₄ als Emulgator und 0,4 g (NH₄)₂S₂O₈ sowie 0,08 g Na₂S₂O₅ als Starter eingefüllt. Anschließend wurde, wie in Beispiel 1 beschrieben, aus einem Vorratsbehälter ein Monomerengemisch, bestehend aus 77,5 g VDF, 63,3 g Perfluormethylvinylether, 0,9 g 1,1-Difluor-bromethylen und 8,3 g CF₂=CF-O-(CF₂-CF₂-O)₃-CF₃ entsprechend molaren Anteilen von 75,0:23,6:0,4:1,0 mol%, bis zu einem Druck von 3 bar vorgelegt. Das Reaktionsgemisch wurde auf 50°C aufgeheizt und der Druck durch Nachdosieren des oben genannten Monomerengemisches auf 10 bis 11 bar eingestellt. Der nach Einsetzen der Reaktion abfallende Druck wurde durch periodisches Nachdosieren des oben genannten Monomerengemisches bis zu dessen vollständigem Verbrauch wieder auf 10 bis 11 bar einreguliert. Nach einer Reaktionszeit von 28 Stunden wurde das Reaktionsgemisch auf 20°C abgekühlt und zur Beendigung der Reaktion 50 g einer 3 Gewichtsprozent NaNO₂ enthaltenden wäßrigen Lösung zugegeben. Nach weiteren 3 bis 5 Minuten Rührzeit wurde entgast und der erhaltene Latex durch Ausfrieren oder durch Zugabe von 2%-iger Calciumchlorid-Lösung koaguliert. Danach wurde filtriert, das Polymerisat mit heißem Wasser gewaschen und schließlich bei 70°C und Normaldruck getrocknet (83% Ausbeute). Laut ¹⁹F-NMR-Spektroskopie enthielt das Produkt die Monomere VDF:Perfluormethylvinylether:1,1-Difluor-bromethylen: CF₂=CF-O-(CF₂-CF₂-O)₃-CF₃ in Anteilen von 79,2:20,1:0,3:0,4 mol%. Der [η]-Wert betrug 0,52 dl/g, die Mooney-Viskosität (bei 100°C) 71 und die Glastemperatur -37°C.

Von dem Polymer wurde, wie in Beispiel 1 beschrieben, eine Mischung hergestellt und vulkanisiert. Die Probe wies eine Zugfestigkeit von 14,0 MPa und eine Zugdehnung von 180 % auf. Der Druckverformungsrest betrug 18 %.

### Vergleichsbeispiel 1 (zu den Beispielen 1 und 2)

In ein evakuiertes und mit Argon gespültes Reaktionsgefäß von einem Liter Inhalt wurden 447 g destilliertes Wasser, 2,5 g C₃F₇OCF(CF₃)CF₂OCF(CF₃)COONH₄ als Emulgator und 1,25 g (NH₄)₂S₂O₈ sowie 0,15 g Na₂S₂O₅ als Starter eingefüllt. Anschließend wurde, wie in Beispiel 1 beschrieben, aus einem Vorratsbehälter ein Monomerengemisch, bestehend aus 80,6 g VDF, 68,2 g Perfluormethylvinylether und 1,2 g 1,1 -Difluor-bromethylen entsprechend molaren Anteilen von 75,0:24,5:0,5 mol% bis zu einem Druck von 3 bar vorgelegt. Das Reaktionsgemisch wurde auf 52°C aufgeheizt und der Druck durch Nachdosieren des oben genannten Monomerengemisches auf 10 bis 11 bar eingestellt. Der nach Einsetzen der Reaktion abfallende Druck wurde durch periodisches Nachdosieren des oben genannten Monomerengemisches bis zu dessen vollständigem Verbrauch wieder auf 10 bis 11 bar einreguliert. Nach einer Reaktionszeit von 11 Stunden wurde das Reaktionsgemisch auf 20°C abgekühlt und zur Beendigung der Reaktion 50 g einer 3 Gewichtsprozent NaNO₂ enthaltenden wäßrigen Lösung zugegeben. Nach weiteren 3 bis 5 Minuten Rührzeit wurde entgast und der erhaltene Latex durch Ausfrieren oder durch Zugabe von 2%-iger Calciumchlorid-Lösung koaguliert. Danach wurde filtriert, das Polymerisat mit heißem Wasser gewaschen und schließlich bei 70°C und Normaldruck getrocknet (92% Ausbeute). Laut ¹⁹FNMR-Spektroskopie enthielt das Produkt die Monomere VDF:Perfluormethylvinylether:1,1-Difluor-bromethylen in Anteilen von 76,9:22,7:0,4 mol%. Der [η]-Wert betrug 0,55 dl/g, die Mooney-Viskosität (bei 100°C) 75 und die Glastemperatur -35°C.

Von dem Polymer wurde, wie in Beispiel 1 beschrieben, eine Mischung hergestellt und vulkanisiert. Die Probe wies eine Zugfestigkeit von 14,0 MPa und eine Zugdehnung von 190 % auf. Der Druckverformungsrest betrug 28 %.

### Beispiel 3

In ein evakuiertes und mit Argon gespültes Reaktionsgefäß von einem Liter Inhalt wurden 456 g destilliertes Wasser, 5 g C₃F₇OCF(CF₃)CF₂OCF(CF₃)COONH₄ als Emulgator und 1,25 g (NH₄)₂S₂O₈ sowie 0,12 g Na₂S₂O₅ als Starter eingefüllt. Anschließend wurde, wie in Beispiel 1 beschrieben, aus einem Vorratsbehälter ein Monomerengemisch bestehend aus 77,1 g VDF, 51,8 g HFP, 1,2 g 1,1-Difluor-bromethylen und 20,0 g CF₂=CF-O-CF₂-CF₂-(O-CF₂)₂-O-CF₃ entsprechend molaren Anteilen von 75,0:21,5:0,5:3,0 mol%, bis zu einem Druckvon 3 bar vorgelegt. Das Reaktionsgemisch wurde auf 50°C aufgeheizt und der Druck durch Nachdosieren des oben genannten Monomerengemisches auf 10 bis 11 bar eingestellt. Der nach Einsetzen der Reaktion abfallende Druck wurde durch periodisches Nachdosieren des oben genannten Monomerengemisches bis zu dessen vollständigen Verbrauch wieder auf 10 bis 11 bar einreguliert. Nach einer Reaktionszeit von 24 Stunden wurde das Reaktionsgemisch auf 20°C abgekühlt und zur Beendigung der Reaktion 50 g einer 3 Gewichtsprozent NaNO₂ enthaltenden wäßrigen Lösung zugegeben. Nach weiteren 3 bis 5 Minuten Rührzeit wurde entgast und der erhaltene Latex durch Ausfrieren oder durch Zugabe von 2%-iger Calciumchlorid-Lösung koaguliert. Danach wurde filtriert, das Polymerisat mit heißem Wasser gewaschen und schließlich bei 70°C und Normaldruck getrocknet (93% Ausbeute). Laut ¹⁹F-NMR-Spektroskopie enthielt das Produkt die Monomere VDF:HFP: 1,1-Difluor-bromethylen:CF₂=CF-O-CF₂-CF₂-(O-CF₂)₂-O-CF₃ in Anteilen von 78,7:18,7:0,3:2,3 mol%. Der [η]-Wert betrug 0,48 dl/g, die Mooney-Viskosität (bei 100°C) 73 und die Glastemperatur -35°C.

Von dem Polymer wurde, wie in Beispiel 1 beschrieben, eine Mischung hergestellt und vulkanisiert. Die Probe wies eine Zugfestigkeit von 13,0 MPa und eine Zugdehnung von 160 % auf. Der Druckverformungsrest betrug 15 %.

### Vergleichsbeispiel 2 (zum Beispiel 3)

In ein evakuiertes und mit Argon gespültes Reaktionsgefäß von einem Liter Inhalt wurden 445 g destilliertes Wasser, 2,5 g C₃F₇OCF(CF₃)CF₂OCF(CF₃)COONH₄ als Emulgator und 1,25 g (NH₄)₂S₂O₈ als Starter eingefüllt. Anschließend wurde, wie in Beispiel 1 beschrieben, aus einem Vorratsbehalter ein Monomerengemisch, bestehend aus 84,2 g VDF, 64,5 g HFP und 1,3 g 1,1-Difluor-bromethylen entsprechend molaren Anteilen von 75,0:24,5:0,5 mol%, bis zu einem Druck von 3 bar vorgelegt. Das Reaktionsgemisch wurde auf 60°C aufgeheizt und der Druck durch Nachdosieren des oben genannten Monomerengemisches auf 10 bis 11 bar eingestellt. Der nach Einsetzen der Reaktion abfallende Druck wurde durch periodisches Nachdosieren des oben genannten Monomerengemisches bis zu dessen vollständigem Verbrauch wieder auf 10 bis 11 bar einreguliert. Nach einer Reaktionszeit von 15 Stunden wurde das Reaktionsgemisch auf 20°C abgekühlt und zur Beendigung der Reaktion 50 g einer 3 Gewichtsprozent NaNO₂ enthaltenden wäßrigen Lösung zugegeben. Nach weiteren 3 bis 5 Minuten Rührzeit wurde entgast und der erhaltene Latex durch Ausfrieren oder durch Zugabe von 2%-iger Calciumchlorid-Lösung koaguliert. Danach wurde filtriert, das Polymerisat mit heißem Wasser gewaschen und schließlich bei 70°C und Normaldruck getrocknet (96% Ausbeute). Laut ¹⁹F-NMR-Spektroskopie enthielt das Produkt die Monomere VDF:HFP:1,1-Difluor-bromethylen in Anteilen von 79,1:20,6:0,3 mol%. Der [η]-Wert betrug 0,38 dl/g, die Mooney-Viskosität (bei 100°C) 91 und die Glastemperatur -22°C.

Von dem Polymer wurde, wie in Beispiel 1 beschrieben, eine Mischung hergestellt und vulkanisiert. Die Probe wies eine Zugfestigkeit von 16,1 MPa und eine Zugdehnung von 215 % auf. Der Druckverformungsrest betrug 35 %.

### Beispiel 4

In ein evakuiertes und mit Argon gespültes Reaktionsgefäß von einem Liter Inhalt wurden 450 g destilliertes Wasser, 5 g C₃F₇OCF(CF₃)CF₂OCF(CF₃)COONH₄ als Emulgator und 1,0 g (NH₄)₂S₂O₈ sowie 0,12 g Na₂S₂O₅ als Starter eingefüllt. Anschließend wurde, wie in Beispiel 1 beschrieben, aus einem Vorratsbehälter ein Monomerengemisch, bestehend aus 64,3 g VDF, 49,9 g HFP, 1,1 g 1,1-Difluor-bromethylen, 15,5 g TFE und 19,2 g CF₂=CF-O-CF₂-CF₂-(O-CF₂)₂-O-CF₃ entsprechend molaren Anteilen von 65,0:21,5:0,5:10,0:3,0 mol%, bis zu einem Druck von 3 bar vorgelegt. Das Reaktionsgemisch wurde auf 50°C aufgeheizt und der Druck durch Nachdosieren des oben genannten Monomerengemisches auf 10 bis 11 bar eingestellt. Der nach Einsetzen der Reaktion abfallende Druck wurde durch periodisches Nachdosieren des oben genannten Monomerengemisches bis zu dessen vollständigem Verbrauch wieder auf 10 bis 11 bar einreguliert. Nach einer Reaktionszeit von 33 Stunden wurde das Reaktionsgemisch auf 20°C abgekühlt und zur Beendigung der Reaktion 50 g einer 3 Gewichtsprozent NaNO₂ enthaltenden wäßrigen Lösung zugegeben. Nach weiteren 3 bis 5 Minuten Rührzeit wurde entgast und der erhaltene Latex durch Ausfrieren oder durch Zugabe von 2%-iger Calciumchlorid-Lösung koaguliert. Danach wurde filtriert, das Polymerisat mit heißem Wasser gewaschen und schließlich bei 70°C und Normaldruck getrocknet (94% Ausbeute). Laut ¹⁹F-NMR-Spektroskopie enthielt das Produkt die Monomere VDF:HFP:1,1-Difluor-bromethylen:TFE:CF₂=CF-O-CF₂-CF₂-(O-CF₂)₂-O-CF₃ in Anteilen von 70,0:17,5:0,3:10,0:2,3 mol%. Der [η]-Wert betrug 0,48 dl/g, die Mooney-Viskosität (bei 100°C) 120 und die Glastemperatur -35°C.

Von dem Polymer wurde, wie in Beispiel 1 beschrieben, eine Mischung hergestellt und vulkanisiert. Die Probe wies eine Zugfestigkeit von 15,0 MPa und eine Zugdehnung von 195 % auf. Der Druckverformungsrest betrug 12 %.

### Vergleichsbeispiel 3 (zum Beispiel 4)

In ein evakuiertes und mit Argon gespültes Reaktionsgefäß von einem Liter Inhalt wurden 450 g destilliertes Wasser, 2,5 g C₃F₇OCF(CF₃)CF₂OCF(CF₃)COONH₄ als Emulgator und 1,25 g (NH₄)₂S₂O₈ als Starter eingefüllt. Anschließend wurde, wie in Beispiel 1 beschrieben, aus einem Vorratsbehälter ein Monomerengemisch, bestehend aus 70,1 g VDF, 61,9 g HFP, 1,2 g 1,1-Difluor-bromethylen und 16,8 g TFE entsprechend molaren Anteilen von 65,0:24,5:0,5:10,0 mol%, bis zu einem Druck von 3 bar vorgelegt. Das Reaktionsgemisch wurde auf 60°C aufgeheizt und der Druck durch Nachdosieren des oben genannten Monomerengemisches auf 10 bis 11 bar eingestellt. Der nach Einsetzen der Reaktion abfallende Druck wurde durch periodisches Nachdosieren des oben genannten Monomerengemisches bis zu dessen vollständigem Verbrauch wieder auf 10 bis 11 bar einreguliert. Nach einer Reaktionszeit von 14 Stunden wurde das Reaktionsgemisch auf 20°C abgekühlt und zur Beendigung der Reaktion 50 g einer 3 Gewichtsprozent NaNO₂ enthaltenden wäßrigen Lösung zugegeben. Nach weiteren 3 bis 5 Minuten Rührzeit wurde entgast und der erhaltene Latex durch Ausfrieren oder durch Zugabe von 2%-iger Calciumchlorid-Lösung koaguliert. Danach wurde filtriert, das Polymerisat mit heißem Wasser gewaschen und schließlich bei 70°C und Normaldruck getrocknet (94% Ausbeute). Laut ¹⁹F-NMR-Spektroskopie enthielt das Produkt die Monomere VDF:HFP:1,1-Difluor-bromethylen:TFE in Anteilen von 67,3:21,5:0,3:10,9 mol%. Der [η]-Wert betrug 0,33 dl/g, die Mooney-Viskosität (bei 100°C) 68 und die Glastemperatur -17°C.

Von dem Polymer wurde, wie in Beispiel 1 beschrieben, eine Mischung hergestellt und vulkanisiert. Die Probe wies eine Zugfestigkeit von 13,5 MPa und eine Zugdehnung von 140 % auf. Der Druckverformungsrest betrug 15 %.

### Interpretation der Ergebnisse:

Die Vergleichsbeispiele verdeutlichen den Einfluß der Komponente d) auf die Glastemperatur; ein Maß für die Kälteflexibilität.

Ohne Komponente d) (siehe Vergleichsbeispiel 1 und 2 im Vergleich zu Beispiel 1 bzw. 3) liegen die Glastemperaturen wesentlich höher als mit Komponente d).

Zudem zeigen die Beispiele 1 und 2 im Vergleich zu Vergleichsbeispiel 1, daß der teure fluorierte Methylvinylether teilweise oder ganz durch Perfluoroxaalkyl-vinylether ersetzt werden kann, wobei in der Summe betrachtet deutlich geringere Mengen benötigt werden.

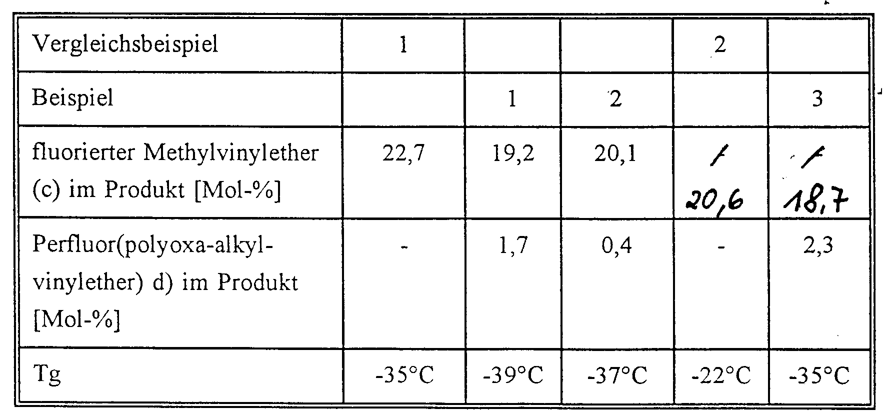

## Patentansprüche

1. Peroxidisch vernetzbare Fluorkautschuke, die vernetzungsaktive Reaktivstellen aufweisen und polymerisierte Einheiten von Vinylidenfluorid, gegebenenfalls Tetrafluorethylen, mindestens einem fluorierten Propen und/oder Methylvinylethern und mindestens einem Perfluor(polyoxa-alkyl-vinylether) enthalten, dadurch gekennzeichnet, daß diese
a) 65-82 mol% Vinylidenfluorid,
b) 0-12 mol% Tetrafluorethylen,
c) 12-23 mol% mindestens eines fluorierten Propens und/oder fluorierten Methyl-vinylethers,
d) 0,3-6 mol% mindestens eines Perfluor(polyoxa-alkyl-vinylether)s der Formel (I)
CF₂=CF-O-R_{F} (I),
wobei R_{F} = -(CF₂)ᵢ(-O-CF₂)ⱼ-O-CF₃ mit i = 3 und j = 0 oder i = 2 und j = 1-4;
oder wobei R_{F} = -(CF₂-CF₂-O)ₖ-CₗF₂ₗ₊₁ mit k = 1-4, und l = 1 oder 2 und
e) 0,1-1,0 mol% vernetzungsaktive Reaktivstellen enthalten.

2. Peroxidisch vernetzbare Fluorkautschuke nach Anspruch 1, dadurch gekennzeichnet, daß diese
a) 70-82 mol% Vinylidenfluorid,
b) 0-12 mol% Tetrafluorethylen,
c) 16-23 mol% mindestens eines fluorierten Methyl-vinylethers,
d) 0,3-5 mol% mindestens eines Perfluor(polyoxa-alkyl-vinylether)s der Formel (I)
CF₂=CF-O-R_{F} (I),
wobei R_{F} = -(CF₂)ᵢ(-O-CF₂)ⱼ-O-CF₃ mit i = 3 und j = 0 oder m = i und j = 1-4;
oder wobei R_{F} = -(CF₂-CF₂-O)ₖ-CF₃ mit k = 1-4 und
e) 0,1-1,0 mol% vernetzungsaktive Reaktivstellen enthalten.

3. Peroxidisch vernetzbare Fluorkautschuke nach Anspruch 1, dadurch gekennzeichnet, daß diese
a) 65-82 mol% Vinylidenfluorid,
b) 0-12 mol% Tetrafluorethylen,
c) 12-20 mol% mindestens eines fluorierten Propens,
d) 1-6 mol% mindestens eines Perfluor(polyoxa-alkyl-vinylether)s der Formel (I)
CF₂=CF-O-R_{F} (I),
wobei R_{F} = -(CF₂)ᵢ(-O-CF₂)ⱼ-O-CF₃ mit i = 3 und j = 0 oder i = 2 und j = 1-4;
oder wobei R_{F} = -(CF₂-CF₂-O)ₖ-CF₃ mit k = 1-4 und
e) 0,1-1,0 mol% vernetzungsaktive Reaktivstellen enthalten.

4. Peroxidisch vernetzbare Fluorkautschuke nach einem der Ansprüche 1 bis 3, dadurch gekennzeichnet, daß Komponente d) ein Perfluor(polyoxa-alkyl-vinylether) der Formel (I) mit R_{F} = -(CF₂)ᵢ(-O-CF₂)ⱼ-O-CF₃, i = 2 und j = 1-4 ist.

5. Peroxidisch vernetzbare Fluorkautschuke nach einem der Ansprüche 1 bis 3, dadurch gekennzeichnet, daß Komponente d) ein Perfluor(polyoxa-alkyl-vinylether) der Formel (I) mit R_{F} = -(CF₂-CF₂-O)ₖ-CF₃ und k = 1-4 ist.

6. Peroxidisch vernetzbare Fluorkautschuke nach einem der Ansprüche 1 bis 5, dadurch gekennzeichnet, daß Komponente c) mindestens eine Verbindung aus der Gruppe von Hexafluorpropen und Pentafluorpropen und/oder Perfluormethylvinylether ist.

7. Peroxidisch vernetzbare Fluorkautschuke nach einem der Ansprüche 1 bis 6, dadurch gekennzeichnet, daß e) C=C-Doppelbindungen und/oder Brom- und/oder Iodreste sind.

8. Verfahren zur Herstellung von peroxidisch vernetzbaren Fluorkautschuken nach einem der Ansprüche 1 bis 7,
dadurch gekennzeichnet,
daß die Komponenten a), c) bis d) und gegebenenfalls b) radikalisch in Lösung, Suspension oder Emulsion in Gegenwart von mindestens zwei C=C-Doppelbindungen enthaltenden Verbindungen und/oder brom- und/oder iodhaltigen Olefinen und/oder brom- und/oder iodhaltigen gesättigten Verbindungen bei 0°C bis 120°C bei
erhöhtem Druck copolymerisiert.

9. Verfahren zur Herstellung von peroxidisch vernetzbaren Fluorkautschuken nach Anspruch 8,
dadurch gekennzeichnet,
daß die Komponenten a), c) bis d) und gegebenenfalls b) in wäßriger Dispersion in Gegenwart von perfluorierten Emulgatoren und mindestens zwei C=C-Doppelbindungen enthaltenden Verbindungen und/oder brom- und/oder iodhaltigen Olefinen und/oder brom- und/oder iodhaltigen gesättigten Verbindungen bei Temperaturen von 20° bis 80°C, einem Druck von > 2 bar mit einem radikalischen Initiatorsystem copolymerisiert werden.

10. Verwendung der peroxidisch vernetzbaren Fluorkautschuke nach einem der Ansprüche 1 bis 7 zur Herstellung von technischen Kautschukartikeln.

## Claims

1. Peroxide crosslinkable fluororubbers having crosslinking-active reactive sites and containing polymerised units of vinylidene fluoride, optionally tetrafluoroethylene, at least one fluorinated propene and/or methyl vinyl ethers and at least one perfluoro(polyoxaalkyl vinyl ether), characterised in that these rubbers contain
a) 65-82 mol.% of vinylidene fluoride,
b) 0-12 mol.% of tetrafluoroethylene,
c) 12-23 mol.% of at least one fluorinated propene and/or fluorinated methyl vinyl ether,
d) 0.3-6 mol.% of at least one perfluoro(polyoxaalkyl vinyl ether) of the formula (I)
CF₂=CF-O-R_{F} (I),
wherein R_{F} = -(CF₂)ᵢ(-O-CF₂)ⱼ-O-CF₃ where i = 3 and j = 0 or i = 2 and j = 1-4;
or wherein R_{F} = -(CF₂-CF₂-O)ₖ-C_{ℓ}F_{2ℓ+1} where k = 1-4 and ℓ = 1 or 2 and
e) 0.1-1.0 mol.% of crosslinking-active reactive sites.

2. Peroxide crosslinkable fluororubbers according to claim 1, characterised in that they contain
a) 70-82 mol.% of vinylidene fluoride,
b) 0-12 mol.% of tetrafluoroethylene,
c) 16-23 mol.% of at least one fluorinated methyl vinyl ether,
d) 0.3-5 mol.% of at least one perfluoro(polyoxaalkyl vinyl ether) of the formula (I)
CF₂=CF-O-R_{F} (I),
wherein R_{F} = -(CF₂)ᵢ(-O-CF₂)ⱼ-O-CF₃ where i = 3 and j = 0 or i = 2 and j = 1-4;
or wherein R_{F} = -(CF₂-CF₂-O)ₖ-CF₃ where k = 1-4, and
e) 0.1-1.0 mol.% of crosslinking-active reactive sites.

3. Peroxide crosslinkable fluororubbers according to claim 1, characterised in that they contain
a) 65-82 mol.% of vinylidene fluoride,
b) 0-12 mol.% of tetrafluoroethylene,
c) 12-20 mol.% of at least one fluorinated propene,
d) 1-6 mol.% of at least one perfluoro(polyoxaalkyl vinyl ether) of the formula (I)
CF₂=CF-O-R_{F} (I),
wherein R_{F} = -(CF₂)ᵢ(-O-CF₂)ⱼ-O-CF₃ where i = 3 and j = 0 or i = 2 and j = 1-4;
or wherein R_{F} = -(CF₂-CF₂-O)ₖ-CF₃ where k = 1-4 and
e) 0.1-1.0 mol.% of crosslinking-active reactive sites.

4. Peroxide crosslinkable fluororubbers according to one of claims 1 to 3, characterised in that component d) is a perfluoro(polyoxaalkyl vinyl ether) of the formula (I) where R_{F} = -(CF₂)ᵢ(-O-CF₂)ⱼ-O-CF₃, i = 2 and j = 1-4.

5. Peroxide crosslinkable fluororubbers according to one of claims 1 to 3, characterised in that component d) is a perfluoro(polyoxaalkyl vinyl ether) of the formula (I) where R_{F} = -(CF₂CF₂-O)ₖ-CF₃ and k = 1-4.

6. Peroxide crosslinkable fluororubbers according to one of claims 1 to 5, characterised in that component c) is at least one compound from the group comprising hexafluoropropene and pentafluoropropene and/or perfluoromethyl vinyl ether.

7. Peroxide crosslinkable fluororubbers according to one of claims 1 to 6, characterised in that e) comprises C=C double bonds and/or bromine and/or iodine residues.

8. Process for the production of peroxide crosslinkable fluororubbers according to one of claims 1 to 7, characterised in that components a), c) to d) and optionally b) are free-radically copolymerised in solution, suspension or emulsion at 0°C to 120°C under elevated pressure in the presence of compounds containing at least two C=C double bonds and/or olefins containing bromine and/or iodine and/or saturated compounds containing bromine and/or iodine.

9. Process for the production of peroxide crosslinkable fluororubbers according to claim 8, characterised in that components a), c) to d) and optionally b) are copolymerised in an aqueous dispersion with a free radical initiator system at temperatures of 20° to 80°C and a pressure of >2 bar in the presence of perfluorinated emulsifiers and compounds containing at least two C=C double bonds and/or olefins containing bromine and/or iodine and/or saturated compounds containing bromine and/or iodine.

10. Use of the peroxide crosslinkable fluororubbers according to one of claims 1 to 7 for the production of industrial rubber articles.

## Revendications

1. Caoutchoucs fluorés réticulables par des peroxydes, qui présentent des sites réactifs aptes à une réticulation et qui contiennent des unités polymérisées de fluorure de vinylidène, le cas échéant, de tétrafluoréthylène, d'au moins un propène et/ou d'au moins un éther méthylvinylique fluorés et d'au moins un perfluoro(polyoxa-alkyl-vinyléther) caractérisés en ce qu'ils contiennent
a) à concurrence de 65 à 82 moles %, du fluorure de vinylidène,
b) à concurrence de 0 à 12 moles %, du tétrafluoréthylène,
c) à concurrence de 12 à 23 moles %, au moins un propène fluoré et/ou au moins un éther méthylvinylique fluoré,
d) à concurrence de 0,3 à 6 moles %, au moins un perfluoro(polyoxa-alkyl-vinyléther) répondant à la formule (I)
CF₂=CF-O-R_{F} (I)
dans laquelle
R_{F} représente un groupe -(CF₂)ᵢ(-O-CF₂)ⱼ-O-CF₃ dans lequel i = 3 et j = 0 ou i = 2 et j = 1-4;
ou dans laquelle
R_{F} représente un groupe -(CF₂-CF₂-O)k-C_{ℓ}F_{2ℓ+1} dans lequel k = 1-4 et ℓ = 1 ou 2, et
e) à concurrence de 0,1 à 1,0 mole % des sites réactifs aptes à une réticulation.

2. Caoutchoucs fluorés réticulables par des peroxydes selon la revendication 1, caractérisés en ce qu'ils contiennent
a) à concurrence de 70 à 82 moles %, du fluorure de vinylidène,
b) à concurrence de 0 à 12 moles %, du tétrafluoréthylène,
c) à concurrence de 16 à 23 moles %, au moins un éther méthylvinylique fluoré,
d) à concurrence de 0,3 à 5 moles %, au moins un perfluoro(polyoxa-alkyl-vinyléther) répondant à la formule (I)
CF₂=CF-O-R_{F} (I),
dans laquelle
R_{F} représente un groupe -(CF₂)ᵢ(-O-CF₂)ⱼ-O-CF₃ dans lequel i = 3 et j = 0 ou i = 2 et j = 1-4;
ou dans laquelle
R_{F} représente un groupe-(CF₂-CF₂-O)ₖ-CF₃ dans lequel k = 1-4, et
e) à concurrence de 0,1 à 1,0 mole % des sites réactifs aptes à une réticulation.

3. Caoutchoucs fluorés réticulables par des peroxydes selon la revendication 1, caractérisés en ce qu'ils contiennent
a) à concurrence de 65 à 82 moles %, du fluorure de vinylidène,
b) à concurrence de 0 à 12 moles %, du tétrafluoréthylène,
c) à concurrence de 12 à 20 moles %, au moins un propène fluoré,
d) à concurrence de 1 à 6 moles %, au moins un perfluoro(polyoxa-alkyl-vinyléther) répondant à la formule (I)
CF₂=CF-O-R_{F}
dans laquelle
R_{F} représente un groupe -(CF₂)ᵢ(-O-CF₂)ⱼ-O-CF₃ dans lequel i = 3 et j = 0 ou i = 2 et j = 1-4;
ou dans laquelle
R_{F} représente un groupe -(CF₂-CF₂-O)ₖ-CₗF₃ dans lequel k = 1-4, et
e) à concurrence de 0,1 à 1,0 mole %, des sites réactifs aptes à une réticulation.

4. Caoutchoucs fluorés réticulables par des peroxydes selon l'une quelconque des revendications 1 à 3, caractérisés en ce que le composant d) est un perfluoro(polyoxa-alkyl-vinyléther) de formule (I) dans laquelle R_{F} représente -(CF₂)ᵢ(-O-CF₂)ⱼ-O-CF₃, i = 2 et j = 1-4.

5. Caoutchoucs fluorés réticulables par des peroxydes selon l'une quelconque des revendications 1 à 3, caractérisés en ce que le composant d) est un perfluoro(polyoxa-alkyl-vinyléther) de formule (I) dans laquelle R_{F} représente -(CF₂-CF₂-O)ₖ-CF₃ et k = 1-4.

6. Caoutchoucs fluorés réticulables par des peroxydes selon l'une quelconque des revendications 1 à 5, caractérisés en ce que le composant c) représente au moins un composé choisi parmi le groupe conprenant l'hexafluoropropène et le pentafluoropropène et/ou l'éther perfluorométhyvinylique.

7. Caoutchoucs fluorés réticulables par des peroxydes selon l'une quelconque des revendications 1 à 6, caractérisés en ce que e) représente des liaisons doubles C=C et/ou des radicaux bromo- et/ou iodo.

8. Procédé pour la préparation de caoutchoucs fluorés réticulables par des peroxydes selon l'une quelconque des revendications 1 à 7, caractérisé en ce qu'on copolymérise les composants a), c) à d) et éventuellement b) par voie radicalaire en solution, en suspension ou en émulsion en présence de composés contenant au moins deux liaisons doubles C=C et/ou d'oléfines bromées et/ou iodées et/ou de composés saturés bromés et/ou iodés, à une température de 0°C à 120°C, sous pression élevée.

9. Procédé pour la préparation de caoutchoucs fluorés réticulables par des peroxydes selon la revendication 8, caractérisé en ce qu'on copolymérise les composants a), c) à d) et éventuellement b) en dispersion aqueuse en présence d'émulsifiants perfluorés et de composés contenant au moins deux liaisons doubles C=C et/ou d'oléfines bromées et/ou iodées et/ou de composés saturés bromés et/ou iodés, à des températures de 20°C à 80°C, sous une pression > 2 bar, avec un système d'initiateur radicalaire.

10. Utilisation des caoutchoucs fluorés réticulables par des peroxydes selon l'une quelconque des revendications 1 à 7, pour la préparation d'articles techniques en caoutchouc.
